# EUROPÄISCHE PATENTANMELDUNG

(11) **EP 2 101 069 A2**
(43) Veröffentlichungstag der Anmeldung: **16.09.2009**
(21) Anmeldenummer: 09152569.1
(22) Anmeldetag: 11.02.2009
(51) Int. Cl.: F16B 25/10

(54) **Selbstbohrschraube**

(30) Priorität: 13.03.2008 DE 102008000652
(71) Anmelder: HILTI Aktiengesellschaft, 9494 Schaan (LI)
(72) Erfinder: Baumgartner, Michael, 9462 Montlingen (CH); Loichinger, Albert, 9468 Sax (CH)

(57) **Zusammenfassung**

Gegenstand der vorliegenden Erfindung ist eine Selbstbohrschraube (10) mit einem wenigstens bereichsweise ein Gewinde (13) tragenden Schaft (11), der eine Längsachse (L) definiert und an dessen erstem Ende eine Bohrspitze (12) mit einem Durchmesser (D) und an dessen gegenüberliegenden zweiten Ende ein Kopf (15) angeordnet ist, wobei die Bohrspitze (12) wenigstens eine erste Schneidkante (21) und wenigstens eine zweite Schneidkante (22) aufweist, und wobei an der Bohrspitze (12) ein erster Spankanal (24), der der ersten Schneidkante (21) zugeordnet ist und an einer ersten Seite der Bohrspitze (12) liegt, und ein zweiter Spankanal (25), der der zweiten Schneidkante (22) zugeordnet ist und an einer der ersten Seite gegenüberliegenden zweiten Seite der Bohrspitze (12) liegt, angeordnet sind, und wobei die Bohrspitze (12) ein in der Längsachse (L) liegendes Zentrum (Z) aufweist. Beide Startpunkte (26, 27) sind sich mit einem maximalen Versatz (Y) gegenüberliegend in einer mittleren Distanz (X) zum Zentrum (Z) angeordnet, wobei die Distanz (X) dem 0,01 bis 0,15-fachen des Durchmessers (D) entspricht und wobei der Versatz (Y) dem 0 bis 0,8-fachen der Distanz (X) entspricht.

## Beschreibung

Die vorliegende Erfindung betrifft eine Selbstbohrschraube der im Oberbegriff von Patentanspruch 1 genannten Art.

Derartige Selbstbohrschrauben werden z. B. zur Verschraubung von Metallblechen an Stahlträgern vorwiegend bei Dach- und Wandkonstruktionen mit Trapez- und Profilblechen auf Stahlträgern genutzt. Die Selbstbohrschraube ist mit einer Bohrspitze ausgerüstet die ein Loch durch die Bleche und den Stahlträger bohrt. Anschliessend furcht die Schraube ein Gewinde und zieht die Bleche an dem Träger zusammen.

Aus der DE 198 03 672 A1 ist eine Selbstbohrschraube mit einem Kopf und einem sich daran anschliessenden Schaft bekannt, der an seinem dem Kopf abgewandten Ende eine Bohrspitze mit einer ersten Schneidkante und einer zweiten Schneidkante aufweist. An der Bohrspitze sind zwei Spankanäle angeordnet die jeweils von einer der beiden Schneidkanten ausgehen und in Richtung Kopf der Selbstbohrschraube entlang der Längsachse der Selbstbohrschraube verlaufen. Die Spankanäle dienen dabei der Abfuhr der beim Bohren entstehenden Materialspäne. Die Startpunkte der beiden Spankanäle an den Schneidkanten sind rotationssymmetrisch an der Bohrspitze angeordnet. Zwischen der Bohrspitze und dem Kopf ist der Schaft der Selbstbohrschraube ferner noch mit einem furchenden Gewinde versehen.

Von Nachteil bei einer derartigen Selbstbohrschraube ist, dass das auszubohrende Material eines Werkstücks im in der Längsachse der Selbstbohrschraube liegenden Zentrum der Bohrspitze gequetscht und umformend verdrängt werden muss. Dieses bedeutet für den Anwender einen hohen Kraftaufwand beim Anpressen der Selbstbohrschraube mittels des Schraubgerätes an das Werkstück.

Die Aufgabe der vorliegenden Erfindung liegt darin, die oben genannten Nachteile zu vermeiden.

Die Aufgabe wird durch eine Selbstbohrschraube mit den in Patentanspruch 1 wiedergegebenen Massnahmen gelöst. Demnach sind beide Startpunkte in einer mittleren Distanz zum Zentrum, die dem 0,01 bis 0,15-fachen des Durchmessers der Bohrspitze entspricht, und sich mit einem maximalen Versatz, der dem 0 bis 0,8-fachen der Distanz zum Zentrum entspricht, gegenüberliegend angeordnet. Hierdurch wird eine, bezogen auf die Längsachse der Bohrspitze, asymmetrische Spitzengeometrie erzeugt, bei der wenigstens eine der Schneidkanten (seitliche erste und zweite Schneidkante oder eine im Zentrum liegende dritte Schneidkante) im Bereich des Zentrums der Bohrspitze an den Spankanälen liegt, so dass im Zentrum abgetragenes Material nicht an der Bohrspitze gequetscht wird, sondern über die Spankanäle zu zwei Seiten des Zentrums der Bohrspitze direkt abgeführt wird.

Besonders vorteilhaft entspricht die Distanz dem 0,03 bis 0,06-fachen des Durchmessers, wodurch eine optimale Auslegung der Bohrspitze bezüglich Taumelverhalten und Spanabfuhr im Bereich des Zentrums erzielt wird.

Eine hohe Bohrleistung ergibt sich auch, wenn eine dritte Schneidkante vorgesehen ist, die zwischen der ersten und der zweiten Schneidkante liegt und die durch das Zentrum verläuft, wobei die Startpunkte jeweils zu einer Seite der dritten Schneidkante liegen.

In den Zeichnungen ist die Erfindung in einem Ausführungsbeispiel dargestellt.

Es zeigen:
- Fig. 1: eine erfindungsgemässe Selbstbohrschraube in einer ersten Seitenansicht,
- Fig. 2: ein Detail der Selbstbohrschraube gemäss der Markierung II aus Fig. 1 und in der ersten Seitenansicht in Blickrichtung gemäss der Markierung II aus Fig. 3,
- Fig. 3: ein Detail der Selbstbohrschraube in Aufsicht auf das freie Ende der Bohrspitze gemäss der Markierung III aus Fig. 2,
- Fig. 4: das Detail der Selbstbohrschraube in einer zweiten Seitenansicht in Blickrichtung gemäss der Markierung IV aus Fig. 3.

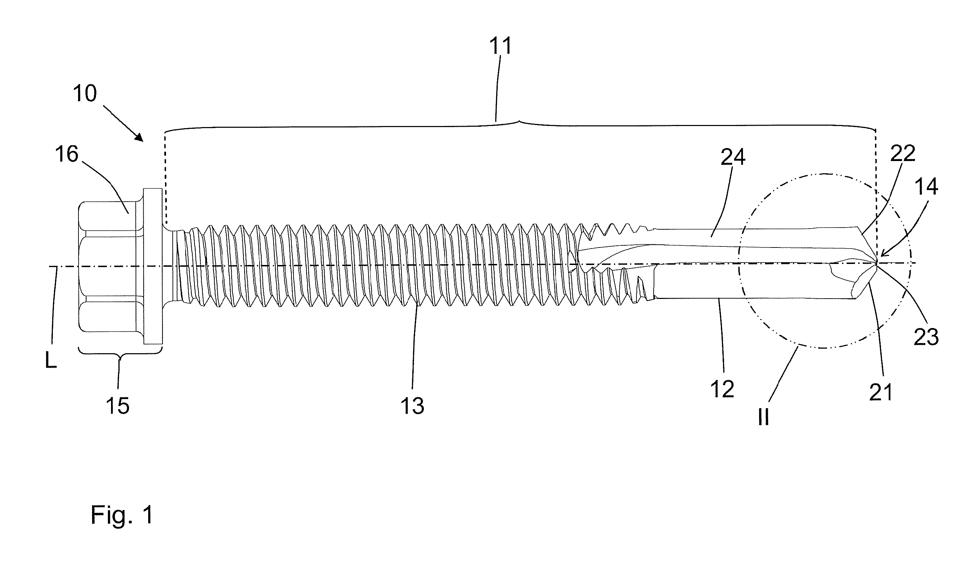

Die in den Figuren 1 bis 4 dargestellte Selbstbohrschraube 10 weist einen ein Gewinde 13 tragenden Schaft 11 auf, an dessen einem Endbereich eine Bohrspitze 12 und an dessen gegenüberliegenden anderen Ende ein Kopf 15 angeordnet ist. Eine Längsachse L der Selbstbohrschraube definiert dabei eine axiale Richtung der Selbstbohrschraube 10. Der Kopf 15 weist ein als Mehrkant ausgebildetes Drehmitnahmemittel 16 für ein Schraubwerkzeug, wie einen Schrauberbit oder einen Schraubenschlüssel auf.

Die Bohrspitze 12 weist an ihrem freien Ende 14 wenigstens eine erste Schneidkante 21 und wenigstens eine zweite Schneidkante 22 auf, die in einem Winkel zueinander liegen. In dem dargestellten Ausführungsbeispiel ist zwischen der ersten Schneidkante 21 und der zweiten Schneidkante 22 noch eine dritte Schneidkante 23 angeordnet, die das in der Längsachse L liegende Zentrum Z der Bohrspitze 12 kreuzt.

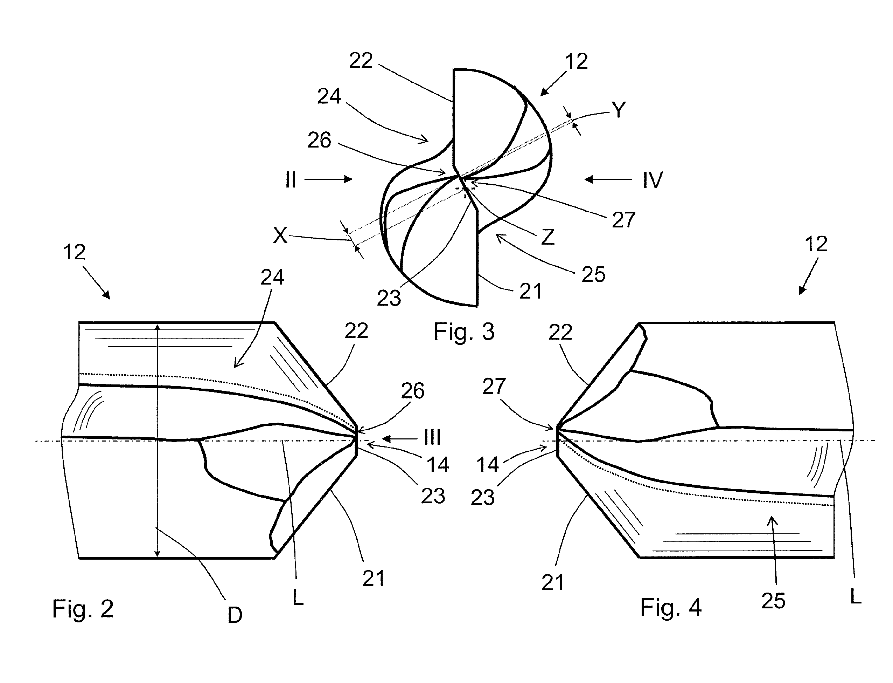

An der Bohrspitze 12 sind ein erster Spankanal 24 und ein zweiter Spankanal 25 angeordnet. Beide Spankanäle 24, 25 verlaufen ausgehend von dem freien Ende 14 der Bohrspitze 12 in Richtung des Kopfs 15 der Selbstbohrschraube 10 entlang der Längsachse L der Selbstbohrschraube 10. Der erste Spankanal 24 ist der ersten Schneidkante 21 zugeordnet und beginnt am freien Ende 14 an einem Startpunkt 26 der an einer ersten Seite der Bohrspitze 12 liegt, während der zweite Spankanal 25 der zweiten Schneidkante 22 zugeordnet ist und am freien Ende 14 an einem Startpunkt 27 beginnt, der auf einer der ersten Seite gegenüberliegenden zweiten Seite der Bohrspitze 12 liegt (siehe insbesondere Fig. 3). Beide Startpunkte 26, 27 liegen sich dabei mit einem maximalen Versatz Y gegenüber und sind beide in einer mittleren Distanz X zum Zentrum Z angeordnet. Die Distanz X entspricht dabei dem 0,01 bis 0,15-fachen des Durchmessers D der Bohrspitze 12 und der Versatz Y entspricht dem 0 bis 0,8-fachen der Distanz X (siehe insbesondere Fig. 3). Vorzugsweise entspricht die Distanz X dem 0,03 bis 0,06-fachen des Durchmessers D. Die mittlere Distanz ist dabei das arithmetische Mittel der Distanzen des ersten Startpunkts 26 und des zweiten Startpunkts 27 zum Zentrum Z.

## Patentansprüche

1. Selbstbohrschraube (10) mit einem wenigstens bereichsweise ein Gewinde (13) tragenden Schaft (11), der eine Längsachse (L) definiert und an dessen erstem Ende eine Bohrspitze (12) mit einem Durchmesser (D) und an dessen gegenüberliegenden zweiten Ende ein Kopf (15) angeordnet ist, wobei die Bohrspitze (12) wenigstens eine erste Schneidkante (21) und wenigstens eine zweite Schneidkante (22) aufweist, und wobei an der Bohrspitze (12) ein erster Spankanal (24), der der ersten Schneidkante (21) zugeordnet ist, der an einem ersten Startpunkt (26) an einem freien Ende (14) der Bohrspitze (12) beginnt und der an einer ersten Seite der Bohrspitze (12) liegt, und ein zweiter Spankanal (25), der der zweiten Schneidkante (22) zugeordnet ist, der an einem zweiten Startpunkt (27) am freien Ende (14) der Bohrspitze (12) beginnt und der an einer der ersten Seite gegenüberliegenden zweiten Seite der Bohrspitze (12) liegt, angeordnet sind, und wobei die Bohrspitze (12) ein in der Längsachse (L) liegendes Zentrum (Z) aufweist,
**dadurch gekennzeichnet,**
**dass** beide Startpunkte (26, 27) sich mit einem maximalen Versatz (Y) gegenüberliegend in einer mittleren Distanz (X) zum Zentrum (Z) angeordnet sind, wobei die Distanz (X) dem 0,01 bis 0,15-fachen des Durchmessers (D) entspricht und wobei der Versatz (Y) dem 0 bis 0,8-fachen der Distanz (X) entspricht.

2. Selbstbohrschraube nach Anspruch 1, **dadurch gekennzeichnet, dass** die Distanz (X) dem 0,03 bis 0,06-fachen des Durchmessers (D) entspricht.

3. Selbstbohrschraube nach Anspruch 1 oder 2, **dadurch gekennzeichnet, dass** eine dritte Schneidkante (23) vorgesehen ist, die zwischen der ersten und der zweiten Schneidkante (21, 22) liegt und die durch das Zentrum (Z) verläuft, wobei die Startpunkte (26, 27) jeweils zu einer Seite der dritten Schneidkante (23) liegen.
